# EUROPÄISCHE PATENTANMELDUNG

(11) **EP 4 799 955 A2**
(43) Veröffentlichungstag der Anmeldung: **02.09.2026**
(21) Anmeldenummer: 26180023.9
(22) Anmeldetag: 30.06.2021
(51) Int. Cl.: B65G 1/04

(54) **WARENLAGER FÜR DAS EIN- UND AUSLAGERN VON AUF LADUNGSTRÄGERN ANGEORDNETEN WAREN ODER WARENGEBINDEN**

(30) Priorität: 02.07.2020 DE 102020117495
(62) Dokumentnummer(n) der früheren Anmeldung(en) nach Art. 76 EPÜ: 21740451.6 / 4 175 899
(71) Anmelder: Nedcon B.V., 7005 AM Doetinchem (NL)
(72) Erfinder: Hermsen, Jeroen, 7207 RB Zutphen (NL); Straatsma, Erwin, 7031 EV Wehl (NL)
(74) Vertreter: Janke Scholl Patentanwälte PartG mbB

(57) **Zusammenfassung**

Vorgeschlagen wird ein Warenlager für das Ein- und Auslagern von auf Ladungsträgern angeordneten Waren mittels eines Verteilerfahrzeugs, mit in einem Gestell angeordneten, durch das Verteilerfahrzeug befahrbaren Gassen (5a, 5b, 6) und mit in dem Gestell angeordneten Lagerplätzen für die Ladungsträger. Bestandteile der Gassen (5a, 5b, 6) sind an dem Gestell befestigte Führungen (11, 12, 13, 14), die jeweils eine durch das Verteilerfahrzeug befahrbare Laufschiene (20) und Seitenwände (21, 22) längs der Laufschiene (20) aufweisen. Um Erschütterungen im Bereich der Befestigungen aufeinanderfolgender Führungen und Querungen zu reduzieren, die sonst beim Überfahren auftreten würden, sind die Führungen (11, 12, 13, 14) an ihren einander zugewandten Enden jeweils mittels mindestens eines Verbindungselements (45) auf einer gestellfesten horizontalen Auflagefläche (17) befestigt. Das Verbindungselement (45) ist seitlich außerhalb der Laufschiene (20) und seitlich außerhalb der Ebene, in der sich die jeweilige Seitenwand (21, 22) erstreckt, angeordnet.

## Beschreibung

Die Erfindung betrifft ein Warenlager für das Ein- und Auslagern von auf Ladungsträgern angeordneten Waren oder Warengebinden mittels eines Verteilerfahrzeugs mit den Merkmalen des Oberbegriffs des Patentanspruchs 1.

Die Erfindung betrifft ferner ein Warenlager für das Ein- und Auslagern von auf Ladungsträgern angeordneten Waren oder Warengebinden mittels eines Verteilerfahrzeugs mit den Merkmalen des Oberbegriffs des Patentanspruchs 2.

Solche Warenlager werden auch als "Shuttlelager" bezeichnet. Das Grundgerüst des Warenlagers bildet ein aus einer Vielzahl vertikaler und horizontaler Gestellelemente aufgebautes Gestell, in dem die Ladeeinheiten, z. B. größere Waren oder mit Waren beladene Paletten, an einzelnen Lagerplätzen gelagert werden, die sich zu beiden Seiten von Transportgassen befinden. Für das Einlagern, Auslagern oder auch Umlagern der Waren innerhalb des Warenlagers kommt ein in den Gassen fahrbares Verteilerfahrzeug zum Einsatz, oft als "Shuttle" oder "Satellitenfahrzeug" bezeichnet. Dieses ist dazu ausgebildet, die mit den Waren beladenen Ladungsträger zu unterfahren, sodann anzuheben und dann an in andere Positionen inner- halb des Warenlagers zu transportieren. Derartige Verteilerfahrzeuge arbeiten autonom und programmgesteuert und verfügen über Mittel, um die jeweiligen Ladungsträger vollautomatisch anzuheben, aus den seitlich angeordneten Lagerpositionen in die Gasse zu ziehen und dann innerhalb und längs der Transportgassen zu bewegen.

In den Transportgassen bewegt sich das Verteilerfahrzeug auf Rollen, die in gestellfest montierten Führungen laufen, wobei sich die Führungen aus einer Laufschiene, deren horizontale Oberseite die Lauffläche für die Rolle bildet, und Seitenwänden zusammensetzen. Um dem Verteilerfahrzeug in größeren Warenlagern einen Wechsel zwischen einzelnen Transportgassen zu ermöglichen, kann zusätzlich noch eine Verbindungsgasse quer zu den Transportgassen vorhanden sein. Dadurch ergeben sich Kreuzungsbereiche der Verbindungsgasse mit den Transportgassen. Da das Verteilerfahrzeug mit seinen Rollen entlang einer linken und einer rechten Führung rollt, ergeben sich in jedem Kreuzungsbereich insgesamt vier Querungen, an denen die Führungen kreuzförmig aufeinander zulaufen.

Die Querungen führen dazu, dass die Führungen in diesen Bereichen stark segmentiert sind, d. h. sie sind aus in Längsrichtung aufeinanderfolgenden, kürzeren oder längeren Schienensegmenten zusammengesetzt. Die dabei einander zugewandten Enden der Schienensegmente liegen auf einer gemeinsamen horizontalen Auflagefläche auf, zum Beispiel auf einer gestellfesten Konsole, und sind darauf vertikal verschraubt. Die als Schrauben ausgebildeten Verbindungselemente führen, selbst wenn die Oberseiten der Schrauben gegenüber den Laufflächen versenkt angeordnet sind, beim Überfahren durch das Verteilerfahrzeug zu einer leichten Erschütterung. Damit verbunden ist eine Geräuschentwicklung.

Zur Reduzierung einer solchen Geräuschentwicklung schlägt die EP 3 321 216 A1 die Verwendung von Einpressgewindebolzen als Verbindungselemente anstelle der sonst üblichen Senkkopfschrauben vor. Die Einpressgewindebolzen sind so gestaltet, dass ihre Oberseite bündig mit der Lauffläche der Laufschiene abschließt, und so ein ruhiger Lauf des Verteilerfahrzeuges mit geringer Geräuschentwicklung erzielt wird. Der Einsatz der entsprechend gestalteten Einpressgewindebolzen führt allerdings zu höheren Teilekosten im Vergleich zu herkömmlichen Verschraubungen.

Ebenfalls zur Reduzierung der Geräuschentwicklung im Bereich der Stoßverbindungen zwischen aufeinanderfolgenden Führungen schlägt die DE 10 2010 029 563 B4 vor, dass nicht alle Stoßverbindungen in Laufrichtung gesehen auf gleicher Höhe angeordnet sind, sondern sie zueinander versetzt angeordnet sind. Das Verteilerfahrzeug überfährt bei seiner Bewegung entlang der Schienensegmente nicht auf beiden Seiten gleichzeitig die dort vorhandenen Stöße. Für die Befestigung der Führungen bzw. Schienensegmente werden Schrauben mit im Wesentlichen horizontaler Verschraubungsachse verwendet, so dass sich die Schrauben außerhalb der Laufflächen der Führungen befinden.

Bei dem Warenlager gemäß der DE 10 2014 114 496 A1 weisen Schienensegmente in Schienenlängsrichtung gesehen links und rechts neben dem Schienenstoß je eine erste Aufnahme für jeweils ein sich senkrecht zur Schienenlängsrichtung erstreckendes, bolzenförmiges Befestigungsmittel auf. Ferner ist eine Befestigungsklammer vorhanden. Diese weist zwei U-förmige Aussparungen auf zur jeweiligen Aufnahme der Befestigungsmittel, wobei die U-förmigen Aussparungen an dem jeweils äußeren Schenkel abgewinkelt ausgebildet sind.

Eine weitere Befestigungstechnik für aufeinanderfolgende Schienensegmente ist aus der DE 10 2014 114 978 A1 bekannt.

Der Erfindung liegt die **Aufgabe** zugrunde, bei einem Warenlager, insbesondere in der Bauart als Shuttlelager, unter Nutzung des Vorteils geringer Teilekosten solche Geräusche und Erschütterungen im Bereich der Befestigungen aufeinanderfolgender Führungen und vorzugsweise auch im Bereich von Querungen zu reduzieren, die ansonsten beim Überfahren durch das Verteilerfahrzeug ("Shuttle") auftreten würden.

Zur **Lösung** dieser Aufgabe wird ein Warenlager mit den Merkmalen des Patentanspruchs 1 und ferner ein Warenlager mit den Merkmalen des unabhängigen Patentanspruchs 2 vorgeschlagen, wobei das Warenlager nach Patentanspruch 2 Kreuzungsbereiche vorsieht, die durch das Verteilerfahrzeug befahrbar sind.

Durch diese Ausgestaltungen wird vermieden, dass es im Bereich der z. B. als Verschraubungen ausgebildeten Verbindungselemente beim Überfahren durch das Verteilerfahrzeug zu durch die Verbindungselemente ausgelösten Stößen und Erschütterungen kommt. Denn dies wäre mit einer erhöhten Geräuschentwicklung verbunden und würde auf Dauer zu einer erhöhten Beanspruchung und längerfristig zu einem Verschleiß an den beteiligten Bauteilen und Komponenten führen, auch an dem Verteilerfahrzeug.

Dieser Vorteil wirkt sich besonders im Bereich der Querung zweier Gassen aus, entlang denen das Verteilerfahrzeug wahlweise fahrbar ist. Der Bereich der Querung wird im Rahmen des Betriebsablaufs besonders häufig durch die Räder bzw. Rollen des Verteilerfahrzeugs überfahren, weshalb in diesem Bereich auch die Dauerbelastung besonders hoch ist.

Vorzugsweise ist nicht nur eine der an der Querung zusammentreffenden Führungen, sondern es sind alle dort zusammentreffenden Führungen an ihrem der Querung zugewandten Ende jeweils mittels mindestens eines sich vertikal erstreckenden Verbindungselements, z. B. einer Schraube, auf der gestellfesten Auflagefläche befestigt. Diese Auflagefläche ist vorzugsweise die flache Oberseite einer stabil gestalteten Platte. Entscheidend ist auch in diesem Fall, dass jedes Verbindungselement seitlich außerhalb der Laufschiene und seitlich außerhalb der Ebene, in der sich die jeweilige Seitenwand erstreckt, angeordnet ist, so dass es beim Vorbeifahren des Verteilerfahrzeugs zu keinen von dem Verbindungselement ausgehenden Erschütterungen kommt.

Wo dies aus Platzgründen möglich ist, sollte die Befestigung der einander zugewandten Endes der jeweiligen Führungen mit jeweils zwei Verbindungselementen erfolgen, also einem ersten Verbindungselement auf der einen, und einem zweiten Verbindungselement auf der anderen Seite der betreffenden Führung. Entscheidend ist auch in diesem Fall, dass jedes der zwei Verbindungselemente seitlich außerhalb der Laufschiene und seitlich außerhalb der Ebene, in der sich die jeweilige Seitenwand erstreckt, angeordnet ist, so dass von den Verbindungselementen beim Vorbeifahren des Verteilerfahrzeugs keine Erschütterungen ausgehen.

Zur Aufnahme der Verbindungselemente sind die Führungen an ihren Enden mit von der Laufschiene seitlich abstehenden Laschen versehen. Das jeweilige Verbindungselement, also z. B. eine Schraube, führt in diesem Fall vertikal durch eine Öffnung oder Ausnehmung hindurch, die in der Lasche zum Beispiel durch Stanzen erzeugt wurde.

Für eine möglichst geringe Verformung der Führungen auch unter Belastung wird vorgeschlagen, dass die Laschen mit ihrer flach gestalteten Unterseite auf der gestellfesten, horizontalen Auflagefläche aufliegen. Herstellungstechnisch ist von Vorteil, wenn die flach gestaltete Oberseite der Laschen bündig mit der Lauffläche der jeweiligen Laufschiene ist.

Für eine herstellungstechnisch optimale Gestaltung der Führung wird ferner vorgeschlagen, dass die Seitenwände auf jenem Längsabschnitt der Führung fehlen, auf dem die Laschen ausgebildet sind. Umgekehrt fehlen die zur Seite hin von der Lauffläche abstehenden Laschen auf jenem Längsabschnitt der Führung, auf dem die Seitenwände ausgebildet sind. Diese Ausgestaltung schafft die Voraussetzung dafür, die Führung kostengünstig aus einem zunächst flachen, durch Stanzen bearbeiteten Stück Stahlblech herzustellen. Ein erster Längsabschnitt des Randes dieses Stahlblechs bildet, aufgrund eines einfach durchzuführenden Biegeprozesses, die jeweilige Seitenwand, während ein kürzerer zweiter Längsabschnitt des Randes keine Umformung erfährt und dieser kürzere Längsabschnitt die Lasche bildet, durch die im Montagezustand das Verbindungselementhindurchführt.

In Bezug auf den Zentralbereich der Querung wird mit einer weiteren Ausgestaltung vorgeschlagen, dass ausschließlich bei einer der Führungen das Ende der Laufschiene zu einer überwiegend kreisförmigen Platte erweitert ist, deren Kreismittelpunkt das Zentrum der Querung bildet.

Vorzugsweise weist die kreisförmige Platte an ihrem Umfang drei teilkreisförmige Randabschnitte auf, denen jeweils kreiskonkav gestaltetet Ränder gegenüberliegen, die an den Enden der Laufschienen der drei übrigen Führunggegenüberliegen.

Zur Verstärkung der Eckenbereiche der Querung wird vorgeschlagen, dass im Eckenbereich zweier im Bereich der Querung aufeinandertreffender Führungen ein zusätzliches Eckelement mit zwei zueinander in einem Winkel angeordneten Wandabschnitten angeordnet ist. Dabei schließt sich der erste Wandabschnitt an die Seitenwand der einen der beiden Führungen, und der zweite Wandabschnitt an die Seitenwand der anderen der beiden Führungen an. Vorzugsweise sind die sich so anschließenden Wandabschnitte zueinander rechtwinklig angeordnet, wobei das Eckelement zwischen diesen zwei Wandabschnitten mindestens zwei weitere Wandabschnitte aufweist, deren der Querung zugewandte Wandflächen zueinander in einem Winkel zwischen 210 ° und 260 ° stehen.

Da das Eckelement Bestandteil der notwendigen Seitenführung des Verteilerfahrzeugs ist und entsprechend hohen seitlichen Belastungen und teils auch Stößen ausgesetzt ist, sollte das Eckelement an mindestens zwei Verbindungsorten, die sich auf der der Querung abgewandten Außenseite des Eckelements befinden, auf der gestellfesten horizontalen Auflagefläche befestigt sein.

Um die Anzahl der insgesamt erforderlichen Verbindungsorte und damit den Montageaufwand bei der Erstellung des Warenlagers gering zu halten, wird ferner vorgeschlagen, dass die Befestigung jeder der beiden im Bereich der Querung aufeinandertreffenden Führungen einerseits und des Eckelements andererseits an demselben Verbindungsort erfolgt und vorzugsweise mit demselben Verbindungselement, d. h. derselben Verschraubung.

Vorzugsweise ist an dem Eckelement ein Vorsprung vorhanden, der von oben her in eine Öffnung oder in eine Ausnehmung an einer der Führungen eingreift. Auf diese Weise wird, auch ohne eine zusätzliche Verschraubung, ein eigenständiger Formschluss erreicht, welcher sich vorteilhaft auf die Fixierung des Eckelements und dessen Stabilisierung gegenüber Stößen auswirkt. Von Vorteil ist dies vor allem dann, wenn das Ende der Laufschiene der Führung zu einer überwiegend kreisförmigen Platte erweitert ist, deren Kreismittelpunkt das Zentrum der Querung bildet, wobei sich dann die genannte Öffnung bzw. Ausnehmung in der kreisförmigen Platte befindet.

Weitere Vorteile und Einzelheiten werden nachfolgend anhand der Zeichnungen erläutert. Darin zeigen:
- Fig. 1: eine Draufsicht auf einen Teil eines Warenlagers für das Ein- und Auslagern von auf versetzbaren Ladungsträgern angeordneten Waren oder Warengebinden;
- Fig. 2: das Detail "II" der Fig. 1 in vergrößertem Maßstab;
- Fig. 3: in perspektivischer Darstellung den in Fig. 2 oben rechts markierten Bereich;
- Fig. 4: die Einzelteile der Fig. 3, hier in einer Explosionsdarstellung;
- Fig. 5: in perspektivischer Darstellung ein Eckelement;
- Fig. 6a: den Bereich der Querung in einer anderen perspektivischen Ansicht, wobei die Eckelemente aus Gründen der Übersicht hier fehlen;
- Fig. 6b: eine Draufsicht auf die Gegenstände nach Fig. 6a und
- Fig. 7: eine Führung in einer Ausgestaltung als Zwischenprodukt.

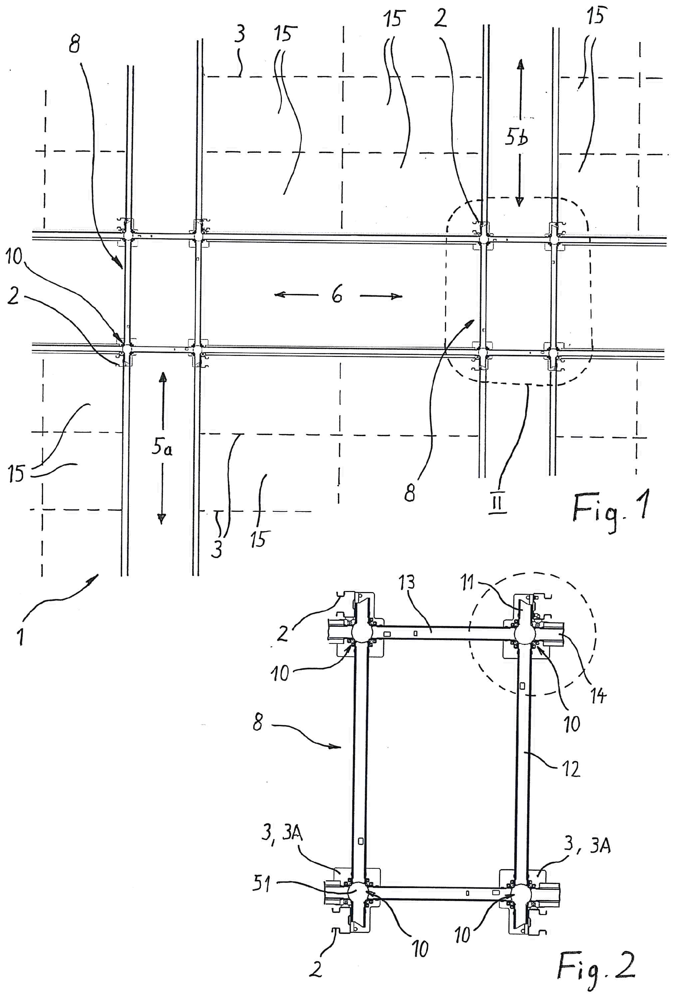

Das statische Grundgerüst des in Figur 1 zu einem Teil abgebildeten Warenlagers bildet ein Gestell 1, welches sich aus einer Vielzahl von vertikalen Elementen 2, insbesondere Stützen, horizontalen Elementen 3 und ggf. verstärkenden Diagonalelementen zusammensetzt.

Innerhalb des ausgedehnten Gestells 1 ist ein motorgetriebenes Verteilerfahrzeug, auch als "Shuttle" bezeichnet, in verschiedene Positionen verfahrbar, um von diesen Positionen aus Waren, die sich auf standardisierten Palletten als Ladungsträger befinden, ein- und auszulagern. Das Verteilerfahrzeug ist dazu ausgebildet, die mit den Waren beladenen Ladungsträger zu unterfahren, dann anzuheben und anschließend an eine andere Position innerhalb des Warenlagers zu transportieren. Solche Verteilerfahrzeuge arbeiten autonom und programm- gesteuert. Sie laufen auf mindestens vier Rollen in gestellfesten Führungen, die sich horizontal innerhalb des ausgedehnten Gestells 1 erstrecken. Die Rollen des Verteilerfahrzeugs sind vorzugsweise alle angetrieben.

Für das Verfahren innerhalb des Warenlagers sind darin mehrere Kanäle bzw. Gassen vorhanden, wobei Fig. 1 in einem Ausschnitt des Warenlagers zwei durch das Verteilerfahrzeug befahrbare Transportgassen 5a, 5b zeigt. Zu beiden Seiten der Transportgassen 5a, 5b befinden sich in dem Gestell 1 einzelne Lagerplätze 15, so dass auf diesen Lagerplätzen 15 abgestellte Ladungsträger durch das Verteilerfahrzeug aus dieser jeweiligen Position entnommen, oder an dieser Position eingelagert werden können. Lagerplätze 15 befinden sich zu beiden Seiten der Transportgassen 5a, 5b und lassen sich daher jeweils durch das in der Transportgasse vor dem betreffenden Lagerplatz 15 positionierte Verteilerfahrzeug bedienen.

Die Transportgassen 5a, 5b sind parallel zueinander angeordnet. Um dem Verteilerfahrzeug einen Wechsel zwischen den Gassen 5a, 5b zu ermöglichen, ist in dem Gestell 1 eine querende Gasse als Verbindungsgasse 6 angeordnet, die ebenfalls durch dasselbe Verteilerfahrzeug befahrbar ist. Durch diese Anordnung der Gassen 5a, 5b, 6 ergeben sich Kreuzungsbereiche 8, in denen das Verteilerfahrzeug nicht nur geradeaus durchfahren kann, sondern es seine Fahrt in Querrichtung ändern und fortsetzen kann.

Da solche Verteilerfahrzeuge üblicherweise in Fahrtrichtung links und in Fahrtrichtung rechts Räder oder Rollen aufweisen und daher insgesamt zwei Fahrspuren benötigen und dies auch für die jeweils andere, also quer angeordnete Gasse gilt, befinden sich in den Kreuzungsbereichen 8 der Transportgassen 5a, 5b mit der Verbindungsgasse 6 jeweils insgesamt vier Querungen 10. Als Querung 10 wird hier der Ort bezeichnet, an dem Führungen für das Verteilerfahrzeug rechtwinklig zusammentreffen. Im Bereich jeder Querung 10 laufen daher insgesamt vier durch Führungen gebildete Fahrspuren kreuzförmig aufeinander zu.

Die Fig. 2 zeigt, als Vergrößerung aus Fig. 1, einen kompletten Kreuzungsbereich 8 mit den insgesamt vier Querungen 10, an denen jeweils vier durch Führungen 11, 12, 13, 14 gebildete Fahrspuren für die Räder des Verteilerfahrzeuges in Kreuzform aufeinander zulaufen.

Um dem Verteilerfahrzeug zu ermöglichen, nach seiner Ankunft im Kreuzungsbereich 8 die Fahrt in Querrichtung fortzusetzen, können, je nach Aufbau des Verteilerfahrzeugs, entweder dessen Räder bzw. Rollen ihre Rollrichtung verändern, oder aber das Verteilerfahrzeug ist mit zwei Radsätzen versehen, von denen vier Rollen bzw. Räder bei der Fahrt entlang der Transportgassen 5a, 5b, und vier andere Rollen bzw. Räder bei der Fahrt entlang der Verbindungsgasse 6 zum Einsatz kommen.

Die Lauffläche und damit jene Ebene, in der die Räder des Verteilerfahrzeugs abrollen, ist aber immer dieselbe, d. h. die Laufflächen an sämtlichen an der Querung 10 zusammentreffenden Führungen 11, 12, 13, 14 befinden sich auf demselben Niveau und ohne stufige Übergänge dazwischen.

Nicht zu verhindern sind allerdings Schienenstöße, d. h. kleinere Fugen zwischen der Lauffläche einer Führung und den Laufflächen der anderen Führungen. Konstruktiv lassen sich Schienenstöße bzw. Fugen minimieren durch z. B. eine entsprechend präzise Bearbeitung der Enden der Führungen 11 - 14. Ebenso wichtig ist, dass die einander zugewandten Enden aller Führungen 11 - 14 auf einer gemeinsamen horizontalen Auflagefläche 17 abgestützt sind. Die den Führungen gemeinsame Auflagefläche 17 bildet hier die flache Oberseite einer horizontalen Platte 3A. Diese Platte ist Bestandteil des Gestells 1 oder ist starr an Bauteilen des Gestells befestigt.

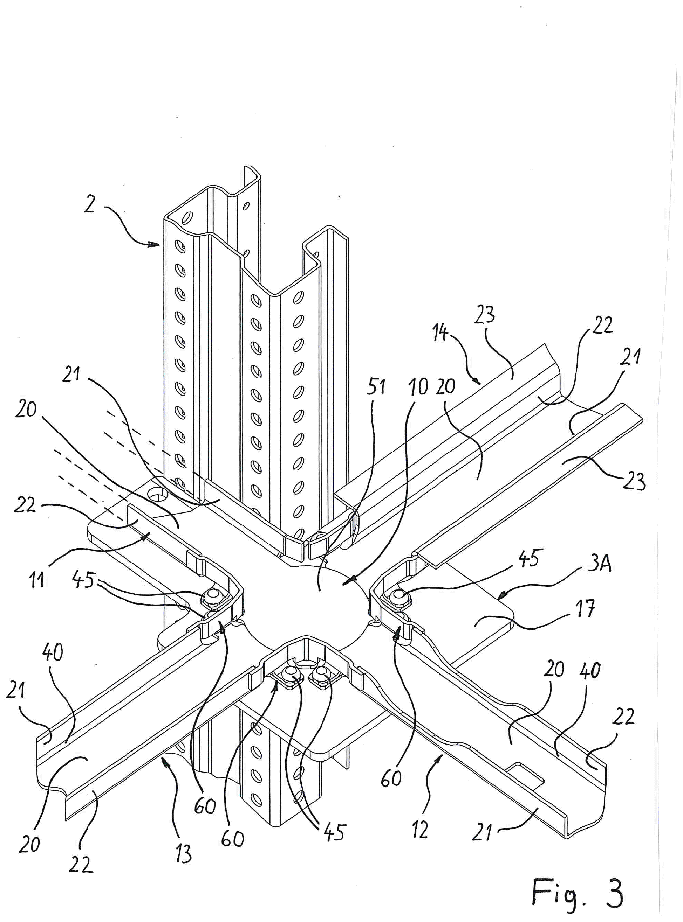

In Fig. 3 ist der Bereich einer der vier Querungen 10 perspektivisch wiedergegeben, einschließlich der die gemeinsame Auflagefläche 17 bildenden horizontalen Platte 3A und den vier auf der Platte 3A abgestützten Führungen 11, 12, 13, 14, welche dem Abrollen sowie dem seitlichen Führen der jeweiligen Räder des Verteilerfahrzeugs dienen. Dabei sind die in ihrer Längsrichtung aufeinanderfolgend angeordneten Führungen 11 und 12 Bestandteile der Gasse 5b. Die in ihrer Längsrichtung aufeinanderfolgend angeordneten Führungen 13 und 14 sind Bestandteile der querenden Gasse 6.

Jede Führung 11, 12, 13, 14 setzt sich einstückig zusammen aus einer Laufschiene 20, auf der die Räder des Verteilerfahrzeugs abrollen, und aufrecht stehenden Seitenwänden 21, 22 zu beiden Seiten entlang der Laufschiene 20. Die Seitenwände 21, 22 können, wie dies in Fig. 3 zwecks Verstärkung der Führung 14 der Fall ist, mit sich nach außen anschließenden, horizontalen Randabschnitten 23 versehen sein, wodurch diese Führung 14 den Querschnitt eines umgedrehten Hutprofils aufweist und Biegelasten besonders gut widerstehen kann. Die Seitenwände 21, 22 stehen vorzugsweise senkrecht zu der Laufschiene 20, um so die nicht gelenkten Rollen bzw. Räder des Verteilerfahrzeugs seitlich zu führen.

Die Seitenwände 21, 22 erstrecken sich nicht über die gesamte Länge der Führungen 11, 12, 13, 14. Vielmehr fehlen die Seitenwände 21, 22 auf den Endabschnitten der Führungen 11, 12, 13, 14, also auf jenen Abschnitten, welche der in Längsrichtung nächstfolgenden Führung zugewandt sind bzw. welche der Querung 10 zugewandt sind. Stattdessen sind die Führungen 11 - 14 auf diesen Endabschnitten mit entweder einer seitlich abstehenden Lasche 31, nämlich im Fall der Führung 11, oder mit zwei seitlich abstehenden Laschen 31, 32 im Fall der Führungen 12, 13 und 14 versehen.

Die Laschen 31, 32 sind einstückig angeformt, wobei sie von der jeweiligen Laufschiene 20 horizontal seitlich abstehen und jeweils mit einer vertikalen Öffnung 33 oder alternativ Ausnehmung versehen sind, durch die eine Schraube mit vertikaler Schraubenachse hindurchführt. Die Laschen 31, 32 sind flachliegend ausgebildet, d. h. sie liegen mit ihrer flach gestalteten Unterseite auf der horizontalen Auflagefläche 17 der Platte 3A auf. Die flach gestaltete Oberseite der Laschen 31, 32 ist bündig zu der Lauffläche der Laufschiene 20.

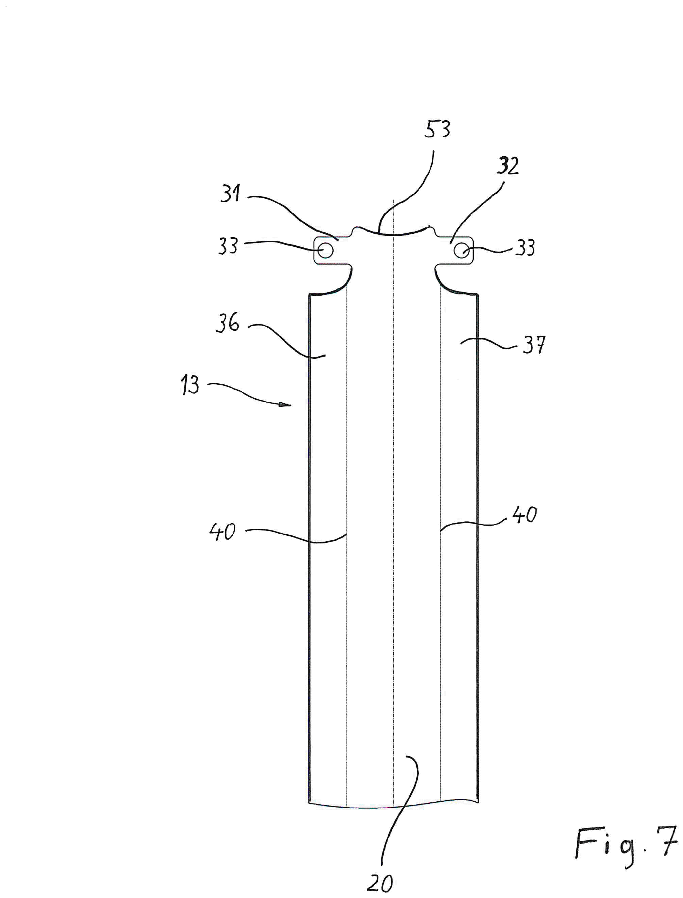

Die Fig. 7 zeigt eine der vier Führungen in einem produktionstechnischen Zwischenstadium, in dem die Seitenwände 21, 22 noch nicht durch einen Biegeprozess nach oben gebogen wurden. Die Führung 13 ist in diesem Stadium noch eine durch Stanzen vorgeformte, flache Stahlplatte. Deren Fläche setzt sich zusammen aus einem Zentralbereich, welcher später die Laufschiene 20 bildet, und aus an den Zentralbereich seitlich anschließenden Randbereichen 36, 37. Auf dem größten Teil der Gesamtlänge der Führung 13 schließen sich die Randbereiche 36, 37 über Biegelinien 40 an den Zentralbereich an, während auf einem Endabschnitt der Führung 13 die dortigen Randbereiche die mit den Öffnungen 33 versehenen Laschen 31, 32 sind. Ein erster Längsabschnitt der Randbereiche 36, 37 bildet also, aufgrund eines einfach durchzuführenden Biegeprozesses, die jeweilige Seitenwand 21, 22, während ein kürzerer zweiter Längsabschnitt der Randbereiche keine spätere Umformung erfährt und stattdessen die jeweilige Lasche 31, 32 bildet. Die Seitenwände 21, 22 fehlen daher auf jener Teillänge der Führung 13, auf der die Laschen 31, 32 ausgebildet sind. Umgekehrt fehlen die horizontal von der Lauffläche abstehenden Laschen 31, 32 auf jener Teillänge der Führung 13, auf dem die Seitenwände 21, 22 ausgebildet sind.

Diese Ausgestaltung schafft die Voraussetzung dafür, die Führung 13 kostengünstig aus einem zunächst flachen, durch Stanzen vorgefertigten Stück Stahlblech herzustellen. Ein erster Randabschnitt dieses Stahlblechs bildet, aufgrund eines einfach durchzuführenden Biegeprozesses, die jeweilige Seitenwand 21, 22, während ein im Vergleich kürzerer zweiter Randabschnitt keine Umformung erfährt und die links und rechts angeordneten Laschen 31, 32 zum Hindurchführen der Verschraubung bildet.

Die hier zu der Führung 13 beschriebene Ausgestaltung gilt auch für die Führungen 12 und 14, wohingegen die Führung 11 nur an einer Seite mit einer Lasche 31 versehen ist, und eine Lasche an der anderen Seite fehlt. Grund hierfür ist, wie Fig. 3 erkennen lässt, die beengte räumliche Situation seitlich der Führung 11, da diese Führung sich sehr nah zu einer vertikalen Stütze 2 befindet.

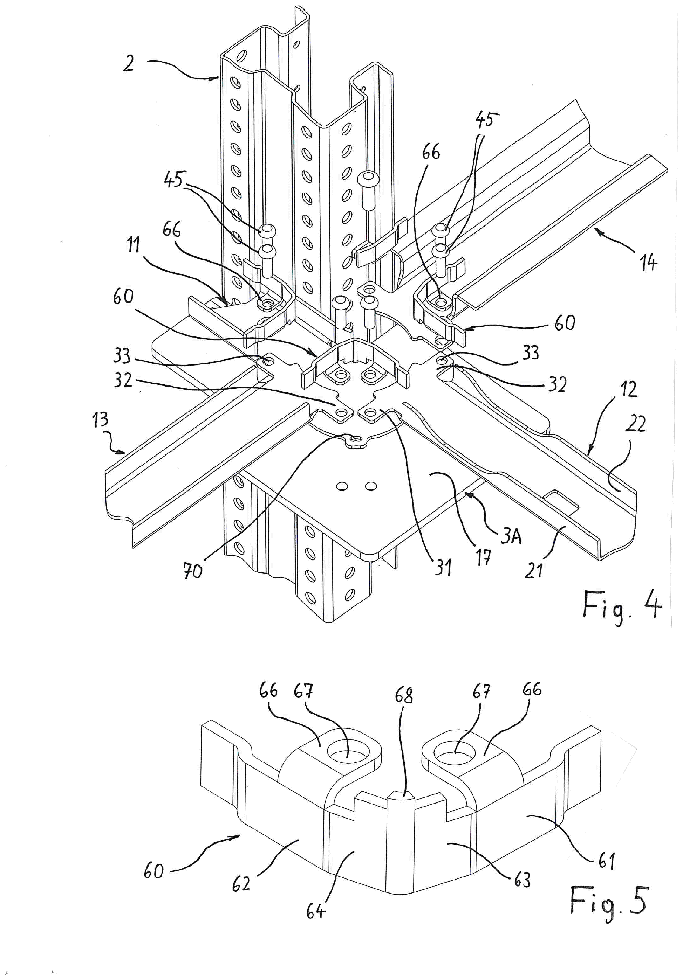

Gemäß Fig. 4 wird durch die Lasche 31 bzw. durch die beiden Laschen 31, 32 jeweils ein Verbindungselement 45 mit vertikaler Achse hindurchgeführt. Das Verbindungselement 45 ist hier eine Verschraubung, welche durch die Öffnung 33 in der jeweiligen Lasche 31, 32 hindurchführt, sowie durch eine zu dieser Öffnung 33 fluchtende Bohrung in der gestellfesten Platte 3A.

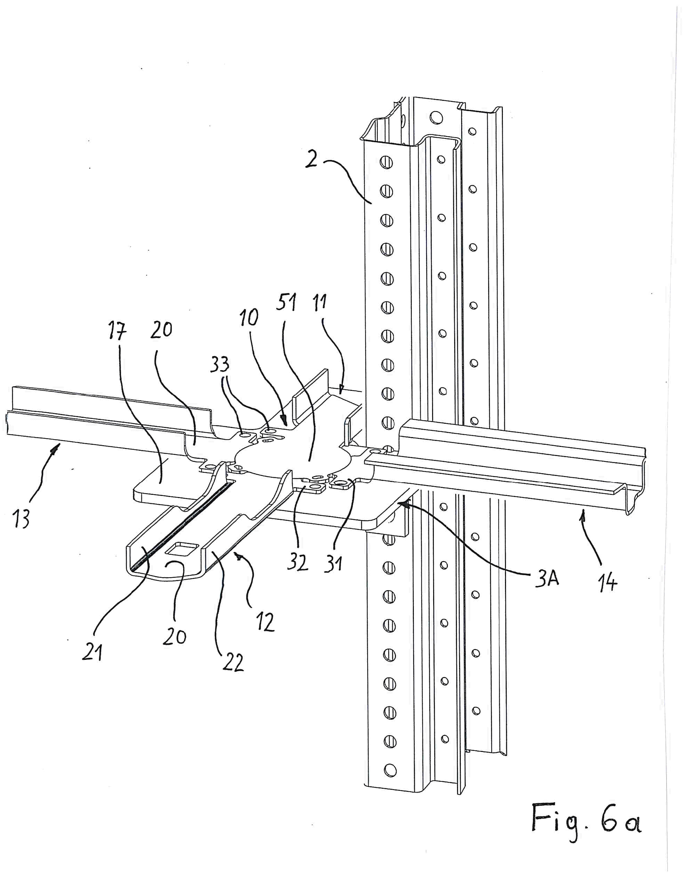

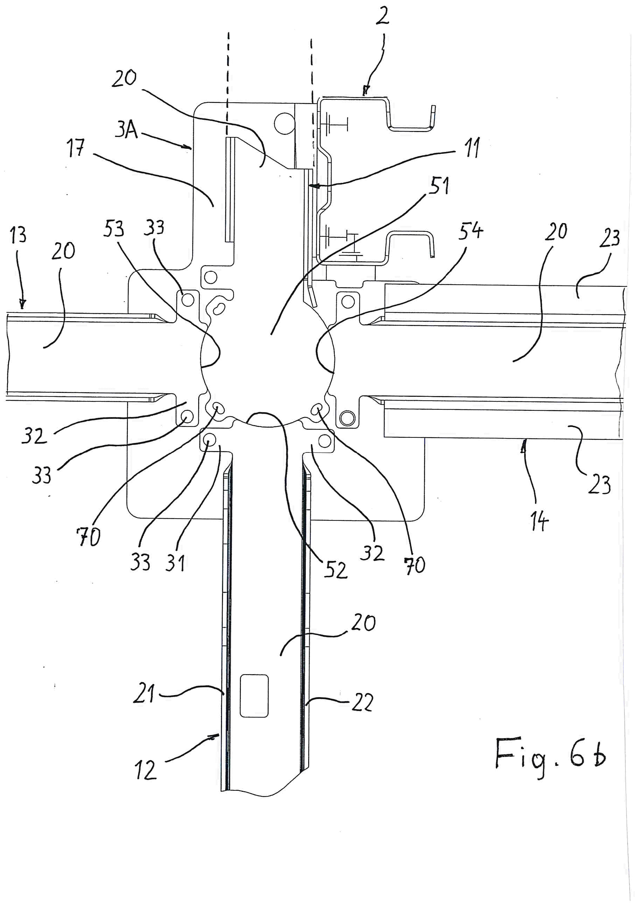

Der Querung 10 zugewandt sind die Enden der vier Führungen 11 - 14 teils unterschiedlich gestaltet, wie dies vor allem die Fig. 6b erkennen lässt. Ausschließlich bei der Führung 11 ist das Ende der Laufschiene 20 zu einer kreisförmigen Platte 51 erweitert, deren Kreismittelpunkt sich im Zentrum der Querung 10 befindet. Die Platte 51 weist an ihrem Umfang drei teilkreisförmige Randabschnitte auf, denen jeweils kreiskonkav gestaltete Ränder 52, 53, 54 an den Enden der Laufschienen der übrigen drei Führungen 12, 13, 14gegenüberliegen.

Das Zentrum der Querung 10 wird also durch die einstückig an der Führung 11 ausgebildete Platte 51 ausgefüllt, und die Enden der anderen Führungen 12, 13, 14 schließen sich mit ihren konkaven Rändern 52, 53, 54 an diese Kreisform an. Eventuell verbleibende Spalte sollten möglichst gering sein, da ihr Überfahren durch die Rollen des Verteilerfahrzeugs Geräusche verursachen kann.

Vorzugsweise ist die Platte 3A mittels einer entsprechenden Konsole unmittelbar an die benachbarte, stabile Stütze 2 angeschraubt. Die Platte 3A ist von solcher Ausdehnung und erstreckt sich so weit bis unter die Führungen 11 - 14, dass die Führungen nicht nur mit jenem Längsabschnitt, auf dem die Laschen 31, 32 vorhanden sind, sondern auch mit einem Teil jenes Längsabschnitts, auf dem die Seitenwände 21, 22 vorhanden sind, auf der Auflagefläche 17 aufliegen. Durch diese Dimensionierung der Platte 3A bzw. der Auflagefläche 17 in Bezug auf die Führungen 11 - 14 ist sichergestellt, dass es zu keinem Durchbiegen der Führungen 11 - 14 auf jenem Längsabschnitt kommt, auf dem die Seitenwand 21, 22 endet und die seitlich abstehende Lasche 31, 32 ansetzt.

Die Fig. 3 lässt, vor allem in Verbindung mit der als Explosionsdarstellung angelegten Fig. 4 erkennen, dass im Eckenbereich der beiden Führungen 11 und 13, im Eckenbereich der bei den Führungen 13 und 12 sowie im Eckenbereich der beiden Führungen 12 und 14 jeweils ein eigenständiges, zusätzliches Eckelement 60 angeordnet ist. Hingegen fehlt ein solches Eckelement 60 im Eckenbereich zwischen den Führungen 11 und 14, da in diesem Eckenbereich wegen der vertikalen Stütze 2 nicht genügend Platz für ein solches Eckelement ist.

Die Aufgabe der Eckelemente 60 besteht darin, im Bereich der Querung 10 den Übergang zwischen den zueinander rechtwinklig angeordneten Seitenwänden 21, 22 zu verbessern und hier störende Kanten zu vermeiden.

Zu diesem Zweck verfügt das in Fig. 5 als Einzelteil wiedergegebene Eckelement 60 über mehrere unterschiedliche Wandabschnitte. Zwei Wandabschnitte 61, 62 sind im Wesentlichen zueinander rechtwinklig angeordnet. Zwischen diesen Wandabschnitten 61, 62 befinden sich zwei weitere Wandabschnitte 63, 64, deren der Querung 10 zugewandte Wandflächen zueinander in einem Winkel zwischen 210 ° und 260 ° angeordnet sind, wodurch diese Wandabschnitte 63, 64 als Einführschrägen für die Rollen des Verteilerfahrzeugsdienen.

Jedes Eckelement 60 ist so gestaltet, dass die Wandabschnitte 61, 62 zu den dort anschließenden Seitenwänden 21, 22 der jeweiligen Führung fluchten. Die der Lauffläche zugewandten Wandflächen einerseits der Seitenwände 21, 22 und andererseits der jeweiligen Wandabschnitte 61, 62 gehen nahezu stufenlos ineinander über.

Jedes Eckelement 60 weist zwei Laschen 66 auf, die mit jeweils einer Öffnung 67 oder alternativ einer Ausnehmung versehen sind. Die Laschen 66 befinden sich auf der der Querung 10 abgewandten Außenseite des Eckelements 60.

In den Fig. 3 und 4 ist die Montageposition des Eckelements 60 erkennbar. Die Öffnungen 67 in den zwei Laschen 66 des Eckelements 60 sind so positioniert, dass sie zu den darunter angeordneten Öffnungen 33 in den Laschen 31, 32 fluchten. Die Befestigung jeder der bei- den im Bereich der Querung aufeinandertreffenden Führungen einerseits und des Eckelements 60 andererseits erfolgt also an demselben Verbindungsort und mit demselben sich vertikal erstreckenden Verbindungselement 45.

Das Eckelement 60 ist zwischen seinen beiden Laschen 66 mit einem angeformten Vorsprung 68 versehen. Dieser greift, bei verschraubtem Eckelement, in eine Öffnung 70 in der Platte 51 formschlüssig ein. Auf diese Weise wird eine zusätzliche Lagepositionierung des Eckelements 60 erreicht, ohne dass hierzu eine weitere Verschraubung erforderlichwäre. Wichtig im Bereich sämtlicher Ecken der Querung 10 ist, dass alle als Verschraubungen aus- gebildeten Verbindungselemente 45 sowohl seitlich außerhalb der jeweiligen Laufschiene 20 angeordnet sind, als auch seitlich außerhalb jener Ebene, in der sich die jeweilige Seitenwand 21, 22 erstreckt. So wird vermieden, dass es bei einem Überfahren durch das Verteilerfahrzeug zu durch die Verschraubungen ausgelösten Stößen und Erschütterungen kommt. Gerade an der Querung 10 ist dies von Bedeutung, da diese im Rahmen des Betriebsablaufs besonders häufig durch das Verteilerfahrzeug überfahren wird.

Die Verbindungselemente 45 sind Verschraubungen aus einer Kopfschraube und einer von unten gegen die Platte 3A gesetzten Kontermutter. Alternativ sind als Verbindungselemente Einpressgewindebolzen verwendbar, wie sie in der EP 3 321 216 A1 näher beschriebensind.

### Bezugszeichenliste

| | | | |
|---|---|---|---|
| 1 | Gestell | 51 | Platte |
| 2 | vertikales Element, Stütze | 52 | Rand |
| 3 | horizontales Element | 53 | Rand |
| 3A | horizontale Platte | 54 | Rand |
| 5a | Gasse, Transportgasse | 60 | Eckelement |
| 5b | Gasse, Transportgasse | | |
| 6 | Gasse, Verbindungsgasse | 61 | Wandabschnitt |
| 8 | Kreuzungsbereich | 62 | Wandabschnitt |
| 10 | Querung | 63 | Wandabschnitt |
| 11 | Führung | 64 | Wandabschnitt |
| 12 | Führung | 66 | Lasche |
| 13 | Führung | 67 | Öffnung |
| 14 | Führung | 68 | Vorsprung |
| 15 | Lagerplatz | 70 | Öffnung |
| 17 | horizontale Auflagefläche | | |
| 20 | Laufschiene | | |
| 21 | Seitenwand | | |
| 22 | Seitenwand | | |
| 23 | Randabschnitt | | |
| 31 | Lasche | | |
| 32 | Lasche | | |
| 33 | Öffnung | | |
| 36 | Randbereich | | |
| 37 | Randbereich | | |
| 40 | Biegelinie | | |
| 45 | Verbindungselement | | |

## Patentansprüche

1. Warenlager für das Ein- und Auslagern von auf Ladungsträgern angeordneten Waren oder Warengebinden mittels eines Verteilerfahrzeugs, mit in einem Gestell (1) angeordneten, durch das Verteilerfahrzeug befahrbaren Gassen (5a, 5b, 6) und mit in dem Gestell (1) angeordneten Lagerplätzen (15) für die Ladungsträger, wobei Bestandteile der Gassen (5a, 5b, 6) an dem Gestell (1) befestigte Führungen (11, 12, 13, 14) sind, die jeweils eine durch das Verteilerfahrzeug befahrbare Laufschiene (20) und Seitenwände (21, 22) längs der Laufschiene (20) aufweisen, **dadurch gekennzeichnet, dass** die Führungen (11, 12, 13, 14) an ihren einander zugewandten Enden jeweils mittels mindestens eines sich vertikal erstreckenden Verbindungselements (45) auf einer gestellfesten horizontalen Auflagefläche (17) befestigt sind, wobei das Verbindungselement (45) seitlich außerhalb der Laufschiene (20) und seitlich außerhalb der Ebene, in der sich die jeweilige Seitenwand (21, 22) erstreckt, angeordnet ist.

2. Warenlager für das Ein- und Auslagern von auf Ladungsträgern angeordneten Waren oder Warengebinden mittels eines Verteilerfahrzeugs, mit in einem Gestell (1) angeordneten, durch das Verteilerfahrzeug befahrbaren Transportgassen (5a, 5b), mit seitlich der Transportgassen (5a, 5b) in dem Gestell (1) angeordneten Lagerplätzen (15) für die Ladungsträger, und mit einer ebenfalls durch das Verteilerfahrzeug befahrbaren Verbindungsgasse (6), welche die Transportgassen (5a, 5b) an Querungen (10) kreuzt, wobei Bestandteile der Verbindungsgasse (6) und der Transportgassen (5a, 5b) an dem Gestell (1) befestigte Führungen (11, 12, 13, 14) sind, die jeweils eine durch das Verteilerfahrzeug befahrbare Laufschiene (20) und Seitenwände (21, 22) längs der Laufschiene (20) aufweisen, wobei die Führungen (11, 12, 13, 14) im Bereich der Querung (10) kreuzförmig aufeinander zulaufen, **dadurch gekennzeichnet, dass** mindestens eine der Führungen (11, 12, 13, 14) an ihrem der Querung (10) zugewandten Ende mittels mindestens eines sich vertikal erstreckenden Verbindungselements (45) auf einer gestellfesten horizontalen Auflagefläche (17) befestigt ist, wobei das Verbindungselement (45) seitlich außerhalb der Laufschiene (20) und seitlich außerhalb der Ebene, in der sich die jeweilige Seitenwand (21, 22) erstreckt, angeordnet ist.

3. Warenlager nach Anspruch 1 oder 2, **dadurch gekennzeichnet, dass** an den Führungen (11, 12, 13, 14) von der Laufschiene (20) seitlich abstehende Laschen (31, 32) angeformt sind, und dass das jeweilige Verbindungselement (45) vertikal durch eine Öffnung (33) oder Ausnehmung in der Lasche (31, 32)hindurchführt.

4. Warenlager nach Anspruch 3, **dadurch gekennzeichnet, dass** die Laschen (31, 32) mit ihrer flach gestalteten Unterseite auf der horizontalen Auflagefläche (17) aufliegen.

5. Warenlager nach Anspruch 3 oder 4, **dadurch gekennzeichnet, dass** die flach gestaltete Oberseite der Laschen (31, 32) bündig mit der Lauffläche der Laufschiene (20) ist.

6. Warenlager nach einem der Ansprüche 3 bis 5, **dadurch gekennzeichnet, dass** die Seitenwände (21, 22) auf jenem Längsabschnitt der Führung (11, 12, 13, 14) fehlen, auf dem die Laschen (31, 32) ausgebildet sind.

7. Warenlager nach einem der Ansprüche 2 bis 6, **dadurch gekennzeichnet, dass** ausschließlich bei einer (11) der Führungen das Ende der Laufschiene (20) zu einer überwiegend kreisförmigen Platte (51) erweitert ist, deren Kreismittelpunkt sich im Zentrum der Querung (10) befindet.

8. Warenlager nach Anspruch 7, **dadurch gekennzeichnet, dass** die Platte (51) an ihrem Umfang drei teilkreisförmige Randabschnitte aufweist, denen jeweils kreiskonkav gestaltete Ränder (52, 53, 54) an den Enden der Laufschienen (20) der übrigen Führungen gegenüberliegen.

9. Warenlager nach einem der Ansprüche 2 bis 8, **dadurch gekennzeichnet, dass** im Eckenbereich zweier im Bereich der Querung (10) aufeinandertreffender Führungen ein Eckelement (60) mit zwei zueinander in einem Winkel angeordneten Wandabschnitten (61, 62) angeordnet ist, von denen der erste Wandabschnitt (61) an die Seitenwand (21) der einen der beiden Führungen anschließt, und der zweite Wandabschnitt (62) an die Seitenwand (22) der anderen der beiden Führungenanschließt.

10. Warenlager nach Anspruch 9, **dadurch gekennzeichnet, dass** die zwei Wandabschnitte (61, 62) zueinander rechtwinklig angeordnet sind, und dass das Eckelement (60) zwischen den zwei Wandabschnitten (61, 62) mindestens zwei weitere Wandabschnitte (63, 64) aufweist, deren der Querung (10) zugewandte Wandflächen zueinander in einem Winkel zwischen 210 ° und 260 ° angeordnet sind.

11. Warenlager nach Anspruch 9 oder 10, **dadurch gekennzeichnet, dass** das Eckelement (60) an mindestens zwei Verbindungsorten, die sich auf der der Querung (10) abgewandten Außenseite des Eckelements (60) befinden, auf der horizontalen Auflagefläche (17) befestigt ist.

12. Warenlager nach einem der Ansprüche 9 bis 11, **dadurch gekennzeichnet, dass** die Befestigung jeder der beiden im Bereich der Querung (10) aufeinandertreffenden Führungen (11, 12, 13, 14) einerseits und des Eckelements (60) andererseits an demselben Verbindungsort erfolgt, vorzugsweise mit demselben Verbindungselement(45).

13. Warenlager nach einem der Ansprüche 9 bis 12, **dadurch gekennzeichnet, dass** ein an dem Eckelement (60) angeformter Vorsprung (68) von oben her in eine Öffnung (70) oder Ausnehmung an einer (11) der Führungen eingreift.

14. Warenlager nach Anspruch 13, **dadurch gekennzeichnet, dass** das Ende der Laufschiene der Führung (11) zu einer überwiegend kreisförmigen Platte (51) erweitert ist, deren Kreismittelpunkt sich im Zentrum der Querung (10) befindet, und dass sich die Öffnung (70) bzw. Ausnehmung in der Platte (51) befindet.

15. Warenlager nach einem der vorangehenden Ansprüche, **dadurch gekennzeichnet, dass** die Führung (11, 12, 13, 14) auf einer solchen Länge auf der horizontalen Auflagefläche (17) aufliegt, dass sowohl der mit den Laschen (31, 32) versehene Längsabschnitt, als auch ein Teil des die Seitenwände (21, 22) aufweisenden Längsabschnitts der Führung auf der Auflagefläche (17) abgestützt ist.

16. Warenlager nach einem der vorangehenden Ansprüche, **dadurch gekennzeichnet, dass** die horizontale Auflagefläche (17) die Oberseite einer an dem Gestell (1) befestigten Platte (3A) ist.
